(19) Europäisches Patentamt
European Patent Office
Office européen des brevets

(11) EP 3 495 414 B1

(12) EUROPEAN PATENT SPECIFICATION

(45) Date of publication and mention of the grant of the patent:
**20.01.2021 Bulletin 2021/03**

(51) Int Cl.:
***C08K 5/378*** *(2006.01)*

(21) Application number: **18197902.2**

(22) Date of filing: **01.10.2018**

# (54) RUBBER COMPOSITION AND PNEUMATIC TIRE

KAUTSCHUKZUSAMMENSETZUNG UND LUFTREIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2017 JP 2017234565**

(43) Date of publication of application:
**12.06.2019 Bulletin 2019/24**

(73) Proprietor: **Sumitomo Rubber Industries, Ltd.**
**Kobe-shi, Hyogo 651-0072 (JP)**

(72) Inventor: **YAMADA, Hiroaki**
**Kobe-shi, Hyogo 651-0072 (JP)**

(74) Representative: **TBK**
**Bavariaring 4-6**
**80336 München (DE)**

(56) References cited:
**EP-A1- 3 395 587**
**US-A- 3 839 303**
**US-B1- 6 646 029**

- **DATABASE WPI Week 200467 Thomson Scientific, London, GB; AN 2004-681090 XP002789974, -& JP 2004 263134 A (YOKOHAMA RUBBER CO LTD) 24 September 2004 (2004-09-24)**
- **DATABASE WPI Week 201737 Thomson Scientific, London, GB; AN 2017-21090Q XP002789942, -& CN 106 519 365 A (YANGZHOU WEINA COMPOSITE MATERIAL TECHNO) 22 March 2017 (2017-03-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 495 414 B1

## Description

### TECHNICAL FIELD

The present invention relates to a rubber composition and a pneumatic tire.

### BACKGROUND ART

In the preparation of rubber compositions, zinc oxide, which catalyzes curing reactions, is usually added to promote curing reactions (see, for example, Patent Literature 1). Zinc oxide may be incorporated into a rubber composition by kneading solid rubber and zinc oxide using a Banbury mixer, open roll mill, kneader, or other kneading machines.

However, disadvantageously, this kneading method has difficulty in obtaining uniform dispersion of zinc oxide, and only part of the added zinc oxide can serve as catalyst. In order to overcome this problem, a large amount of zinc oxide is often added. However, such zinc oxide may act as fracture nuclei, thereby reducing abrasion resistance. Moreover, finely divided zinc oxide and other similar commercial products easily aggregate due to their large specific surface area, and thus leave large aggregates, even after kneading. Such aggregates may act as fracture nuclei, thereby reducing abrasion resistance.

US 6 646 029 B1 relates to a vulcanizable composition comprising a sulfur vulcanizable rubber, a sulfur vulcanizing agent, an accelerating agent selected from the group consisting of non-thiazole sulfenamide accelerators in an amount effective to not substantially inhibit vulcanization and an amount effective to improve the hardness stabilization of said rubber upon vulcanization of a hardness stabilization agent comprising a pyrimidine derivative.

US 3 839 303 A relates to a method for inhibiting the premature vulcanization of rubber with pyrimidine compounds.

JP 2004 - 0 263 134 A relates to a rubber composition containing 100 pts.wt. of a diene rubber, 35-60 pts.wt. of carbon black having a nitrogen-adsorption specific surface area ($N_2SA$) of 100-160 $m^2/g$ and a CTAB adsorption specific surface area($m^2/g$)/iodine adsorption IA(mg/g) ratio of $\geq$0.94, $\geq$0.05 pt.wt. of 2-mercaptobenzothiazole, 0.5-2.0 pts.wt. of sulfur (b) and a compounding agent CDMPS (a) at a (b) / (a) ratio of $\leq$2.0.

### CITATION LIST

### PATENT LITERATURE

Patent Literature 1: JP 2009-079077 A

### SUMMARY OF INVENTION

### TECHNICAL PROBLEM

The present invention aims to provide a rubber composition having good abrasion resistance and a pneumatic tire formed from the rubber composition.

### SOLUTION TO PROBLEM

The present invention relates to a rubber composition, containing:

a compound having a group represented by the following formula (I):

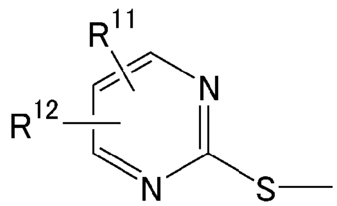

(I)

wherein $R^{11}$ and $R^{12}$ are the same or different and each represent a hydrogen atom or a substituted or unsubstituted monovalent hydrocarbon group optionally containing a heteroatom;
a sulfur atom-containing vulcanization accelerator; and

a particulate zinc carrier including a silicate particle and finely divided zinc oxide or finely divided basic zinc carbonate supported on the surface of the silicate particle.

The rubber composition is preferably obtained by, before kneading a rubber component with any sulfur, kneading the rubber component and the sulfur atom-containing vulcanization accelerator, and then kneading the kneaded mixture with sulfur.
The rubber composition is preferably obtained by, before kneading a rubber component with any sulfur, kneading the rubber component, the sulfur atom-containing vulcanization accelerator, and the compound, and then kneading the kneaded mixture with sulfur.
The rubber composition preferably contains, per 100 parts by mass of a rubber component thereof, 0.1 to 5.0 parts by mass of the compound.
The rubber composition is preferably a rubber composition for tires.
Another aspect of the present invention is a method for preparing the rubber composition, the method including: before kneading a rubber component with any sulfur, kneading the rubber component and the sulfur atom-containing vulcanization accelerator; and then kneading the kneaded mixture with sulfur.
Another aspect of the present invention is a method for preparing the rubber composition, the method including: before kneading a rubber component with any sulfur, kneading the rubber component, the sulfur atom-containing vulcanization accelerator, and the compound, and then kneading the kneaded mixture with sulfur.
Another aspect of the present invention is a pneumatic tire, including a tire component formed from the rubber composition.

ADVANTAGEOUS EFFECTS OF INVENTION

The rubber composition of the present invention, which contains a compound having a group of formula (I) and a sulfur atom-containing vulcanization accelerator, has good abrasion resistance. Further, it is possible to ensure practical cure time and thus to produce the rubber composition and therefore pneumatic tires with high productivity.

DESCRIPTION OF EMBODIMENTS

The rubber composition contains a compound having a group of formula (I) and a sulfur atom-containing vulcanization accelerator. The rubber composition provides good abrasion resistance.
The rubber composition provides good abrasion resistance probably due to the following effect.
The compound having a group of formula (I) is more uniformly incorporated into rubber than sulfur due to the dispersing effect of the specific structure of the formula. Thus, it has a good effect in providing uniform crosslinking (crosslink density-uniformizing effect during vulcanization) . Further, since a particulate zinc carrier that includes finely divided zinc oxide or finely divided basic zinc carbonate supported on the surface of a silicate particle is used as a zinc compound acting as initiation points for crosslinking, the supported finely divided zinc oxide or the like is finely dispersed, the effect of providing uniform crosslinking is further enhanced. Therefore, it seems that the combination of the compound and the particulate zinc carrier provides a synergistic effect with respect to the above effect, thereby resulting in synergistically improved abrasion resistance.
Suitable examples of the rubber composition include a rubber composition that is obtained by, before kneading a rubber component with any sulfur, kneading the rubber component, the sulfur atom-containing vulcanization accelerator, and the compound having a group of formula (I), and then kneading the kneaded mixture with sulfur, as described later. In this case, it is possible to ensure practical cure time and thus to produce the rubber composition with high productivity.
The reason why such a rubber composition provides practical cure time is probably due to the following effect.
The use of the compound having a group of formula (I) alone results in slow curing with unpractical cure rate. However, when the compound is kneaded together with a sulfur atom-containing vulcanization accelerator (base kneading) before kneading of the rubber component with any sulfur (final kneading), curing will proceed at an appropriate rate. This is probably because the compound is converted into a more reactive form by a reaction between the sulfur atom-containing vulcanization accelerator and the compound during kneading. Further, since the rubber composition contains the particulate zinc carrier, an effect is produced which improves the initial rise in the cure curve. Thus, these effects seem to provide appropriate cure rate (curing properties) and practical cure time (curing properties).
The rubber composition contains a compound having a group represented by the following formula (I):

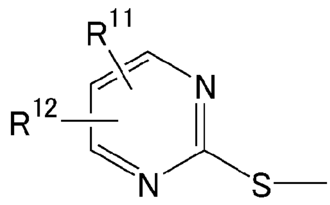

(I)

wherein $R^{11}$ and $R^{12}$ are the same or different and each represent a hydrogen atom or a substituted or unsubstituted monovalent hydrocarbon group optionally containing a heteroatom.

The monovalent hydrocarbon group as $R^{11}$ or $R^{12}$ is not particularly limited and may be linear, branched, or cyclic. Examples of the heteroatom include nitrogen and oxygen atoms. The hydrocarbon group may be saturated or unsaturated. In the case where $R^{11}$ and $R^{12}$ are the monovalent hydrocarbon groups, $R^{11}$ and $R^{12}$ are preferably bound to the carbon atoms adjacent to the two nitrogen atoms, respectively, in the cyclic structure of formula (I) so that they are in meta position to each other, as in the case of below-mentioned 2,2-bis(4,6-dimethylpyrimidyl)disulfide.

The carbon number of the monovalent hydrocarbon group as $R^{11}$ or $R^{12}$ is preferably 1 to 10, more preferably 1 to 8, still more preferably 1 to 6.

Examples of the monovalent hydrocarbon group as $R^{11}$ or $R^{12}$ include substituted or unsubstituted aliphatic, alicyclic, or aromatic hydrocarbon groups optionally containing heteroatoms. Specific examples include substituted or unsubstituted linear, branched, or cyclic alkyl, aryl, and aralkyl groups optionally containing heteroatoms.

In the case where $R^{11}$ and $R^{12}$ are the linear or branched alkyl groups, the carbon number is preferably 1 to 8, more preferably 1 to 4, still more preferably 1 or 2. In the case where $R^{11}$ and $R^{12}$ are the cyclic alkyl groups optionally containing heteroatoms, the carbon number is preferably 3 to 12. In the case where $R^{11}$ and $R^{12}$ are the aryl groups optionally containing heteroatoms, the carbon number is preferably 6 to 10. In the case where $R^{11}$ and $R^{12}$ are the aralkyl groups optionally containing heteroatoms, the carbon number is preferably 7 to 10.

Examples of the linear or branched alkyl groups include methyl, ethyl, n-propyl, isopropyl, n-butyl, iso-butyl, sec-butyl, tert-butyl, pentyl, hexyl, heptyl, 2-ethylhexyl, octyl, nonyl, and decyl groups, and the foregoing groups containing heteroatoms.

Examples of the cyclic alkyl groups include cyclopropyl, cyclobutyl, cyclopentyl, cyclohexyl, cycloheptyl, cyclooctyl, adamanthyl, 1-ethylcyclopentyl, and 1-ethylcyclohexyl groups. Examples of cyclic ether groups include oxirane, oxetane, oxolane, oxane, oxepane, oxocane, oxonane, oxecane, oxete, oxole, dioxolane, dioxane, dioxepane, and dioxecane groups, and the foregoing groups containing heteroatoms.

Examples of the aryl groups include phenyl, tolyl, xylyl, biphenyl, naphthyl, anthryl, and phenanthryl groups, and the foregoing groups containing heteroatoms.

Examples of the aralkyl groups include benzyl and phenethyl groups, and the foregoing groups containing heteroatoms.

In view of the effects mentioned above, $R^{11}$ and $R^{12}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a substituted or unsubstituted linear or branched alkyl group optionally containing a heteroatom.

Suitable examples of the compound having a group of formula (I) include compounds represented by the following formulas (1-1), (1-2), (1-3), (1-4), and (1-5).

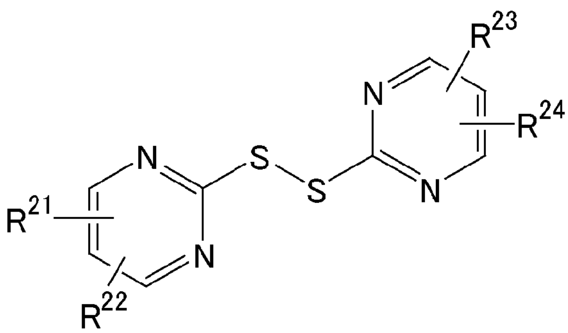

(I-1)

In the formula, $R^{21}$ to $R^{24}$ are the same or different and each represent a hydrogen atom or a substituted or unsubstituted monovalent hydrocarbon group optionally containing a heteroatom.

The monovalent hydrocarbon group as $R^{21}$ to $R^{24}$ is not particularly limited, and examples include those de-

scribed for $R^{11}$ and $R^{12}$. In the case where $R^{21}$ to $R^{24}$ are the monovalent hydrocarbon groups, $R^{21}$ and $R^{22}$ groups, or $R^{23}$ and $R^{24}$ groups are preferably bound to the carbon atoms adjacent to the two nitrogen atoms, respectively, in the cyclic structure of formula (I-1) so that they are in meta position to each other.

The carbon number of the monovalent hydrocarbon group as $R^{21}$ to $R^{24}$ is preferably 1 to 10, more preferably 1 to 8, still more preferably 1 to 6.

In view of the above-mentioned effects, $R^{21}$ to $R^{24}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a substituted or unsubstituted linear or branched alkyl group optionally containing a heteroatom.

Examples of the compounds of formula (I-1) include 2,2-bis(4,6-dimethylpyrimidyl)disulfide.

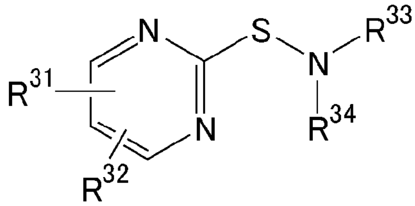

(I-2)

In the formula, $R^{31}$ to $R^{34}$ are the same or different and each represent a hydrogen atom or a substituted or unsubstituted monovalent hydrocarbon group optionally containing a heteroatom.

The monovalent hydrocarbon group as $R^{31}$ to $R^{34}$ is not particularly limited, and examples include those described for $R^{11}$ and $R^{12}$. In the case where $R^{31}$ and $R^{32}$ are the monovalent hydrocarbon groups, $R^{31}$ and $R^{32}$ are preferably bound to the carbon atoms adjacent to the two nitrogen atoms, respectively, in the cyclic structure of formula (1-2) so that they are in meta position to each other.

The carbon number of the monovalent hydrocarbon group as $R^{31}$ to $R^{34}$ is preferably 1 to 10, more preferably 1 to 8, still more preferably 1 to 6.

In view of the above-mentioned effects, $R^{31}$ to $R^{33}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a substituted or unsubstituted linear or branched alkyl group optionally containing a heteroatom. $R^{34}$ is preferably a hydrogen atom.

Examples of the compounds of formula (1-2) include N-t-butyl(4,6-dimethyl-2-pyrimidine)sulfenamide, N-cyclohexyl(4,6-dimethyl-2-pyrimidine)sulfenamide, N-t-butyl(4-methyl-2-pyrimidine)sulfenamide, and N-t-butyl-2-pyrimidine sulfenamide.

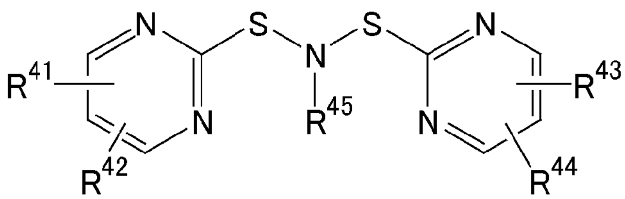

(I-3)

In the formula, $R^{41}$ to $R^{45}$ are the same or different and each represent a hydrogen atom or a substituted or unsubstituted monovalent hydrocarbon group optionally containing a heteroatom.

The monovalent hydrocarbon group as $R^{41}$ to $R^{45}$ is not particularly limited, and examples include those described for $R^{11}$ and $R^{12}$. In the case where $R^{41}$ to $R^{44}$ are the monovalent hydrocarbon groups, $R^{41}$ and $R^{42}$ groups, or $R^{43}$ and $R^{44}$ groups are preferably bound to the carbon atoms adjacent to the two nitrogen atoms, respectively, in the cyclic structure of formula (1-3) so that they are in meta position to each other.

The carbon number of the monovalent hydrocarbon group as $R^{41}$ to $R^{45}$ is preferably 1 to 10, more preferably 1 to 8, still more preferably 1 to 6.

In view of the above-mentioned effects, $R^{41}$ to $R^{45}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a substituted or unsubstituted linear or branched alkyl group optionally containing a heteroatom.

Examples of the compounds of formula (1-3) include N-t-butyl(4,6-dimethyl-2-pyrimidine)sulfenimide, N-t-butyl(4-methyl-2-pyrimidine)sulfenimide, N-t-butyl-2-pyrimidine sulfenimide, N-phenyl(4,6-dimethyl-2-pyrimidine)sulfenimide, N-cyclohexyl(4,6-dimethyl-2-pyrimidine)sulfenimide, N-methyl(4,6-dimethyl-2-pyrimidine)sulfenimide, N-ethyl(4,6-dimethyl-2-pyrimidine)sulfenimide, N-propyl(4,6-dimethyl-2-pyrimidine)sulfenimide, N-n-butyl(4,6-dimethyl-2-pyrimidine)sulfenimide, N-pentyl(4,6-dimethyl-2-pyrimidine)sulfenimide, N-hexyl(4,6-dimethyl-2-pyrimidine)sulfenimide, N-benzyl(4,6-dimethyl-2-pyrimidine)sulfenimide, N-(2-methoxyethyl)-(4,6-dimethyl-2-pyrimidine)sulfenimide, N-(3-methoxypropyl)-(4,6-dimethyl-2-pyrimidine)sulfenimide, and N-dodecaoctyl(4,6-dimethyl-2-pyrimidine)sulfenimide.

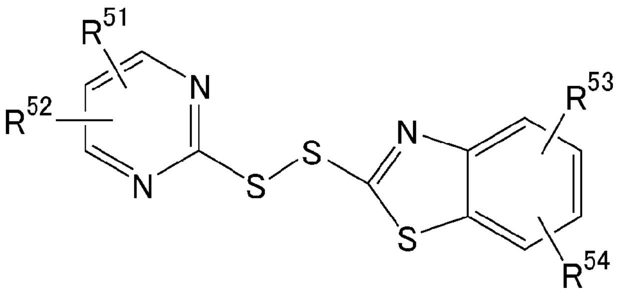

(I-4)

In the formula, $R^{51}$ to $R^{54}$ are the same or different and each represent a hydrogen atom or a substituted or unsubstituted monovalent hydrocarbon group optionally containing a heteroatom.

The monovalent hydrocarbon group as $R^{51}$ to $R^{54}$ is not particularly limited, and examples include those described for $R^{11}$ and $R^{12}$. In the case where $R^{51}$ and $R^{52}$ are the monovalent hydrocarbon groups, $R^{51}$ and $R^{52}$ are preferably bound to the carbon atoms adjacent to the two nitrogen atoms, respectively, in the cyclic structure of formula (1-4) so that they are in meta position to each other.

The carbon number of the monovalent hydrocarbon group as $R^{51}$ to $R^{54}$ is preferably 1 to 10, more preferably 1 to 8, still more preferably 1 to 6.

In view of the above-mentioned effects, $R^{51}$ and $R^{52}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a C1-C6 substituted or unsubstituted linear or branched alkyl group optionally containing a heteroatom. $R^{53}$ and $R^{54}$ are each preferably a hydrogen atom.

Examples of the compounds of formula (1-4) include 2-benzothiazolyl-4,6-dimethyl-2-pyrimidyl disulfide.

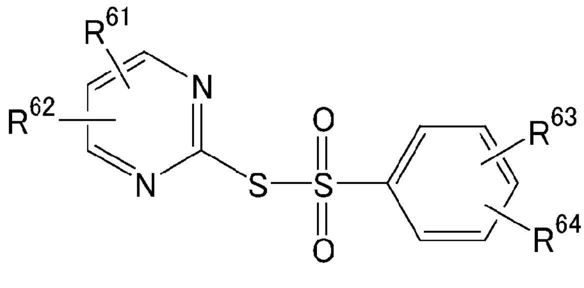

(I-5)

In the formula, $R^{61}$ to $R^{64}$ are the same or different and each represent a hydrogen atom or a substituted or unsubstituted monovalent hydrocarbon group optionally containing a heteroatom.

The monovalent hydrocarbon group as $R^{61}$ to $R^{64}$ is not particularly limited, and examples include those described for $R^{11}$ and $R^{12}$. In the case where $R^{61}$ and $R^{62}$ are the monovalent hydrocarbon groups, $R^{61}$ and $R^{62}$ are preferably bound to the carbon atoms adjacent to the two nitrogen atoms, respectively, in the cyclic structure of formula (1-5) so that they are in meta position to each other.

The carbon number of the monovalent hydrocarbon group as $R^{61}$ to $R^{64}$ is preferably 1 to 10, more preferably 1 to 8, still more preferably 1 to 6.

In view of the above-mentioned effects, $R^{61}$ to $R^{63}$ are each preferably a substituted or unsubstituted monovalent hydrocarbon group optionally containing a heteroatom, more preferably a substituted or unsubstituted linear, branched, or cyclic alkyl group optionally containing a heteroatom, still more preferably a substituted or unsubstituted linear or branched alkyl group optionally containing a heteroatom. $R^{64}$ is preferably a hydrogen atom.

Examples of the compounds of formula (1-5) include S-(4,6-dimethyl-2-pyrimidyl) p-toluenethiosulfonate.

The amount of the compound having a group of formula (I) per 100 parts by mass of the rubber component is preferably 0.1 parts by mass or more, more preferably 0.5 parts by mass or more, still more preferably 0.7 parts by mass or more, but is preferably 5.0 parts by mass or less, more preferably 3.0 parts by mass or less, still more preferably 2.5 parts by mass or less. When the amount is within the range indicated above, the above-mentioned effects can be more

suitably achieved.

The rubber composition contains a particulate zinc carrier that includes a silicate particle and finely divided zinc oxide or finely divided basic zinc carbonate supported on the surface of the silicate particle.

The particulate zinc carrier includes a silicate particle and finely divided zinc oxide or finely divided basic zinc carbonate supported on the surface of the silicate particle. Since the surface of silicate particles has affinity for finely divided zinc oxide and finely divided basic zinc carbonate, it can uniformly support finely divided zinc oxide or finely divided basic zinc carbonate.

The amount of supported finely divided zinc oxide or finely divided basic zinc carbonate, calculated as metallic zinc, is preferably within a range of 6 to 75% by mass. The lower limit of the amount is more preferably 15% by mass or more, still more preferably 25% by mass or more, particularly preferably 35% by mass or more, while the upper limit is more preferably 65% by mass or less, still more preferably 55% by mass or less. When the amount is within the above-indicated range, the above-mentioned effects can be more suitably achieved.

Herein, the supported amount calculated as metallic zinc may be calculated by converting the amount of supported finely divided zinc oxide or finely divided basic zinc carbonate into metallic zinc to obtain a Zn equivalent mass, and using this value in the following equation:

$$\text{Supported amount calculated as metallic zinc (\% by mass)} = [(\text{Zn equivalent mass})/(\text{mass of particulate zinc carrier})] \times 100.$$

The finely divided zinc oxide-supporting silicate particle (particulate zinc carrier) preferably has a BET specific surface area within a range of 10 to 55 $m^2/g$, more preferably 15 to 50 $m^2/g$, still more preferably 20 to 45 $m^2/g$.

The finely divided basic zinc carbonate-supporting silicate particle (particulate zinc carrier) preferably has a BET specific surface area within a range of 25 to 90 $m^2/g$, more preferably 30 to 85 $m^2/g$, still more preferably 35 to 80 $m^2/g$.

Finely divided basic zinc carbonate is finer than finely divided zinc oxide and has a higher BET specific surface area. Thus, the carrier with finely divided basic zinc carbonate has a higher BET specific surface area than the carrier with finely divided zinc oxide, as described above.

The BET specific surface area may be determined by a nitrogen adsorption method using a BET specific surface area meter. The BET specific surface area ($BET_{Zn}$) of the finely divided zinc oxide or finely divided basic zinc carbonate supported on the silicate particle may be calculated using the following equation:

$$BET_{Zn} = \{(BET_{Zn\text{-}Si} \times W_{Zn}) + W_{Si}\ (BET_{Zn\text{-}Si} - BET_{Si})\}/W_{Zn}$$

wherein $BET_{Zn\text{-}Si}$: the BET specific surface area of the particulate zinc carrier;
$BET_{Si}$: the BET specific surface area of the silicate particle;
$W_{Zn}$: the mass (%) of the zinc oxide or basic zinc carbonate in the particulate zinc carrier;
$W_{Si}$: the mass (%) of the silicate particle in the particulate zinc carrier.

The BET specific surface area ($BET_{Zn}$) of the finely divided zinc oxide or finely divided basic zinc carbonate supported on the surface of the silicate particle is preferably within a range of 15 to 100 $m^2/g$, more preferably 40 to 80 $m^2/g$ for finely divided zinc oxide; while it is preferably within a range of 15 to 100 $m^2/g$, more preferably 40 to 80 $m^2/g$ for finely divided basic zinc carbonate.

The particulate zinc carrier with a BET specific surface area adjusted to not less than the lower limit tends to provide a sufficient crosslinking-promoting effect, resulting in sufficiently improved properties such as abrasion resistance. Also, adjusting the BET specific surface area to not more than the upper limit tends to allow finely divided zinc oxide or finely divided basic zinc carbonate to be supported on the carrier, thereby resulting in a uniform crosslinked structure. In addition, such a particulate zinc carrier also tends to be economically advantageous as it is prevented from having an excessive supported amount.

The silicate particle is preferably an aluminum silicate mineral particle. Examples of silicate particles other than aluminum silicate mineral particles include talc, mica, feldspar, bentonite, magnesium silicate, silica, calcium silicate (wollastonite), and diatomite.

The aluminum silicate mineral particle may be, for example, at least one selected from kaolinite, halloysite, pyrophyllite, and sericite.

The aluminum silicate mineral particle is preferably an anhydrous aluminum silicate mineral particle. The anhydrous aluminum silicate mineral particle may be, for example, one produced by firing at least one selected from kaolinite, halloysite, pyrophyllite, and sericite. For example, it may be produced by firing the foregoing clay mineral

consisting of fine particles, at least 80% of which have a particle size of 2 μm or less, at a firing temperature of 500°C to 900°C.

The particulate zinc carrier may be prepared, for example, by mixing an acidic aqueous solution of a zinc salt with an alkaline aqueous solution in the presence of a silicate particle to precipitate finely divided zinc oxide or finely divided basic zinc carbonate so that the finely divided zinc oxide or finely divided basic zinc carbonate is supported on the surface of the silicate particle.

The process of mixing an acidic aqueous solution of a zinc salt with an alkaline aqueous solution in the presence of a silicate particle to precipitate finely divided zinc oxide or finely divided basic zinc carbonate may be carried out specifically as follows.

(1) A silicate particle is dispersed in an acidic aqueous solution of a zinc salt, and an alkaline aqueous solution is added to the dispersion.

(2) A silicate particle is dispersed in an alkaline aqueous solution, and an acidic aqueous solution of a zinc salt is added to the dispersion.

(3) A silicate particle is dispersed in water, and an acidic aqueous solution of a zinc salt and an alkaline aqueous solution are simultaneously added to the dispersion.

The method (1) is particularly preferred among the methods (1) to (3).

The acidic aqueous solution of a zinc salt may be prepared, for example, by adding a zinc salt such as zinc oxide, zinc hydroxide, basic zinc carbonate, zinc sulfate, or zinc nitrate to an acidic aqueous solution. The zinc oxide may be any zinc oxide used as an industrial material. The acidic aqueous solution may be an aqueous solution of an acid such as hydrochloric acid, sulfuric acid, nitric acid, or carbonic acid. The acidic aqueous solution of a zinc salt may also be prepared by adding a water-soluble zinc compound such as zinc chloride to an acidic aqueous solution.

The alkaline aqueous solution may be, for example, an aqueous solution of sodium hydroxide, potassium hydroxide, sodium carbonate, or the like. Usually, the alkaline aqueous solution containing sodium hydroxide, potassium hydroxide, or the like may be used to precipitate and support finely divided zinc oxide. The acidic aqueous solution containing carbonic acid or the alkaline aqueous solution containing sodium carbonate or the like may be used to precipitate and support finely divided basic zinc carbonate.

The basic zinc carbonate-supporting silicate particle may be prepared, for example, by treating a finely divided zinc oxide-supporting silicate particle prepared as above with an ammonium salt aqueous solution or introducing carbonic acid gas into an aqueous suspension of the finely divided zinc oxide-supporting silicate particle for carbonation, thereby converting the supported finely divided zinc oxide to finely divided basic zinc carbonate. These treatments may be used alone or in combination.

The ammonium salt aqueous solution may be an aqueous solution of ammonium hydroxide, ammonium hydrogen carbonate, ammonium carbonate, or the like. These ammonium salt aqueous solutions may be used alone, or two or more of these may be used in combination.

By conducting the treatment with an ammonium salt aqueous solution to convert finely divided zinc oxide to finely divided basic zinc carbonate as described above, finer particles can be supported.

After finely divided zinc oxide or finely divided basic zinc carbonate is precipitated and supported on the surface of the aluminum silicate mineral particle, it is usually washed sufficiently with water, dehydrated/dried, and pulverized.

The particulate zinc carrier may be surface treated with at least one selected from organic acids, fatty acids, fatty acid metal salts, fatty acid esters, resin acids, metal resinates, resin acid esters, silicic acid, silicic acid salts (e.g. Na salt), and silane coupling agents. It may be configured so that the surface is entirely or partially covered with the agent. It is not always necessary to continuously cover the entire surface.

In the case where the particulate zinc carrier is in the form of aqueous slurry, the surface treatment may be carried out in a wet process using a surface treatment agent as it is or after it is dissolved in an appropriate solvent at an appropriate temperature. In the case where the particulate zinc carrier is in the form of powder, the surface treatment may be carried out in a dry process using a surface treatment agent as it is or after it is dissolved in an appropriate solvent at an appropriate temperature.

The particulate zinc carrier may be a product of, for example, Shiraishi Calcium Kaisha Ltd.

The amount of the particulate zinc carrier per 100 parts by mass of the rubber component is preferably 0.3 parts by mass or more, more preferably 0.5 parts by mass or more, still more preferably 0.6 parts by mass or more, particularly preferably 0.7 parts by mass or more, but is preferably 2.0 parts by mass or less, more preferably 1.8 parts by mass or less, still more preferably 1.6 parts by mass or less. When the amount is within the range indicated above, the above-mentioned effects can be more suitably achieved.

In view of the above-mentioned effects, the ratio of the compound having a group of formula (I) to the particulate zinc carrier (the mass ratio of the amount of the compound to the amount of the particulate zinc carrier) is preferably

10/90 to 90/10, more preferably 30/70 to 70/30, still more preferably 40/60 to 60/40.

The rubber composition preferably contains sulfur.

Examples of the sulfur include those used commonly in the rubber industry, such as powdered sulfur, precipitated sulfur, colloidal sulfur, insoluble sulfur, highly dispersible sulfur, and soluble sulfur. These types of sulfur may be used alone, or two or more of these may be used in combination.

The sulfur may be a product of, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur, if present, per 100 parts by mass of the rubber component is preferably 0.1 parts by mass or more, more preferably 0.5 parts by mass or more, but is preferably 3.0 parts by mass or less, more preferably 2.0 parts by mass or less, still more preferably 1.5 parts by mass or less. When the amount is within the above-indicated range, the above-mentioned effects tend to be well achieved.

In view of the above-mentioned effects, the rubber composition contains a sulfur atom-containing vulcanization accelerator.

The term "sulfur atom-containing vulcanization accelerator" refers to a vulcanization accelerator that contains a sulfur atom bound to another molecule via a single bond. There are sulfur atom-containing vulcanization accelerators which release active sulfur and those which do not. To inhibit progress of a crosslinking reaction during kneading, the sulfur atom-containing vulcanization accelerator is preferably one that does not release active sulfur (non-sulfur releasing sulfur atom-containing vulcanization accelerator).

The term "non-sulfur releasing sulfur atom-containing vulcanization accelerator" refers to, for example, a sulfur atom-containing vulcanization accelerator that does not release active sulfur under curing conditions (e.g., at 150°C, 1.5 Mpa) or at lower temperatures or pressures. In other words, the non-sulfur releasing sulfur atom-containing vulcanization accelerator is a sulfur atom-containing vulcanization accelerator that does not function as a vulcanizing agent under curing conditions (e.g., at 150°C, 1.5 Mpa) or at lower temperatures or pressures.

Examples of such non-sulfur releasing sulfur atom-containing vulcanization accelerators include those which are free of $-S_n-$ ($n \geq 2$), such as thiazole vulcanization accelerators (e.g. 2-mercaptobenzothiazole (MBT), zinc salt of 2-mercaptobenzothiazole (ZnMBT), cyclohexylamine salt of 2-mercaptobenzothiazole (CMBT)), sulfenamide vulcanization accelerators (e.g. N-cyclohexyl-2-benzothiazolylsulfenamide (CBS), N-(tert-butyl)-2-benzothiazole sulfenamide (TBBS), N,N-dicyclohexyl-2-benzothiazolylsulfenamide), tetramethylthiuram monosulfide (TMTM), and dithiocarbamate vulcanization accelerators (e.g. piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc N-ethyl-N-phenyldithiocarbamate (ZnEPDC), zinc N-pentamethylenedithiocarbamate (ZnPDC), sodium dibutyldithiocarbamate (NaBDC), copper dimethyldithiocarbamate (CuMDC), iron dimethyldithiocarbamate (FeMDC), tellurium diethyldithiocarbamate (TeEDC)). One type of these vulcanization accelerators may be used alone, or two or more types may be used in combination. Among these, sulfenamide vulcanization accelerators free of $-S_n-$ ($n \geq 2$) are preferred, with N-cyclohexyl-2-benzothiazolylsulfenamide (CBS) or N-(tert-butyl)-2-benzothiazole sulfenamide (TBBS) being more preferred. It should be noted that the thiazole vulcanization accelerator di-2-benzothiazolyl disulfide (MBTS), which contains $-S_n-$ ($n \geq 2$) and can release sulfur, does not function as a vulcanizing agent for natural rubber and polybutadiene rubber when it is present in a conventional amount. Thus, it may be used in the same manner as the non-sulfur releasing sulfur atom-containing vulcanization accelerators.

The amount of the sulfur atom-containing vulcanization accelerator per 100 parts by mass of the rubber component is preferably 0.2 parts by mass or more, more preferably 0.5 parts by mass or more, but is preferably 12.0 parts by mass or less, more preferably 10.0 parts by mass or less, still more preferably 7.0 parts by mass or less. When the amount is within the above-indicated range, the above-mentioned effects tend to be well achieved.

The combined amount of the compound having a group of formula (I), sulfur, and sulfur atom-containing vulcanization accelerator, per 100 parts by mass of the rubber component, is preferably 0.5 parts by mass or more, more preferably 1.0 part by mass or more, still more preferably 1.5 parts by mass or more, but is preferably 7.0 parts by mass or less, more preferably 5.0 parts by mass or less, still more preferably 3.0 parts by mass or less. When the combined amount is within the above-indicated range, the above-mentioned effects tend to be well achieved.

The rubber composition may contain zinc oxide together with the particulate zinc carrier, but the amount of the zinc oxide should be as low as possible.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide, if present, per 100 parts by mass of the rubber component is preferably 0.5 parts by mass or less, more preferably 0.1 parts by mass or less, still more preferably 0 parts by mass (i.e. absent).

The rubber composition contains a rubber component, for example, a diene rubber.

Examples of diene rubbers which may be used include isoprene rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR) . The rubber component may include rubbers other than

the above, such as butyl rubbers and fluororubbers. These rubbers may be used alone, or two or more of these may be used in combination. The rubber component preferably includes SBR, BR, or an isoprene rubber, more preferably SBR or BR.

The rubber component preferably has a weight average molecular weight (Mw) of 200,000 or more, more preferably 350,000 or more. The upper limit of the Mw is not particularly limited and is preferably 3,000,000 or less, more preferably 2,000,000 or less.

Herein, the Mw and the number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The rubber component may include an unmodified diene rubber or a modified diene rubber.

The modified diene rubber may be any diene rubber having a functional group interactive with a filler such as silica. For example, it may be a chain end-modified diene rubber obtained by modifying at least one chain end of a diene rubber with a compound (modifier) having the functional group (chain end-modified diene rubber terminated with the functional group) ; a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); or a chain end-modified diene rubber that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. To more suitably achieve the above-mentioned effects, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.

Non-limiting examples of the SBR include emulsion-polymerized styrene-butadiene rubber (E-SBR) and solution-polymerized styrene-butadiene rubber (S-SBR) . These types of SBR may be used alone, or two or more of these may be used in combination.

The SBR preferably has a styrene content of 5% by mass or more, more preferably 10% by mass or more, still more preferably 15% by mass or more, but preferably 60% by mass or less, more preferably 50% by mass or less. When the styrene content is within the above-indicated range, the above-mentioned effects can be more suitably achieved.

Herein, the styrene content of the SBR is determined by $^1$H-NMR.

The SBR may be a product manufactured or sold by, for example, Sumitomo Chemical Co., Ltd., JSR Corporation, Asahi Kasei Corporation, or Zeon Corporation.

The SBR may be an unmodified SBR or a modified SBR. Examples of the modified SBR include those into which functional groups as listed for the modified diene rubber are introduced.

Non-limiting examples of the BR include high cis BR having high cis content, BR containing syndiotactic polybutadiene crystals, and BR synthesized using rare earth catalysts (rare earth-catalyzed BR). These types of BR may be used alone, or two or more of these may be used in combination. In particular, the BR is preferably a high cis BR having a cis content of 90% by mass or more in order to improve abrasion resistance.

The BR may be an unmodified BR or a modified BR. Examples of the modified BR include those into which functional groups as listed for the modified diene rubber are introduced.

The BR may be a product of, for example, Ube Industries, Ltd., JSR Corporation, Asahi Kasei Corporation, or Zeon Corporation.

Examples of the isoprene rubber include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR) . Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene rubbers may be used alone, or two or more of these may be used in combination. Among these, NR is preferred.

The amount of the SBR, if present, based on 100% by mass of the rubber component is preferably 10% by mass or more, more preferably 30% by mass or more, still more preferably 50% by mass or more, but is preferably 95% by mass or less, more preferably 90% by mass or less. When the amount is within the above-indicated range, the above-mentioned effects tend to be better achieved.

The amount of the BR, if present, based on 100% by mass of the rubber component is preferably 5% by mass or more, more preferably 10% by mass or more, but is preferably 80% by mass or less, more preferably 50% by mass or less, still more preferably 30% by mass or less. When the amount is within the above-indicated range, the above-mentioned effects tend to be better achieved.

To more suitably achieve the above-mentioned effects, the combined amount of the SBR and BR based on 100% by mass of the rubber component is preferably 60% by mass or more, more preferably 80% by mass or more, still more preferably 90% by mass or more, particularly preferably 100% by mass.

The rubber composition preferably contains both S-SBR and high-cis BR. In this case, based on 100% by mass of the rubber component, the amount of the S-SBR is preferably 60 to 90% by mass, and the amount of the high-cis BR is preferably 10 to 40% by mass. When the amounts are within the above-indicated ranges, the above-mentioned effects tend to be better achieved.

The amount of the isoprene rubber, if present, based on 100% by mass of the rubber component is preferably 5% by mass or more, more preferably 10% by mass or more, but is preferably 50% by mass or less, more preferably 30% by mass or less, still more preferably 25% by mass or less.

The rubber composition preferably contains a filler (reinforcing filler).

Non-limiting examples of the filler include silica, carbon black, calcium carbonate, talc, alumina, clay, aluminum hydroxide, aluminum oxide, and mica. Among these, silica or carbon black is preferred in order to more suitably achieve the above-mentioned effects.

The amount of the filler per 100 parts by mass of the rubber component is preferably 15 parts by mass or more, more preferably 20 parts by mass or more, still more preferably 40 parts by mass or more, but is preferably 250 parts by mass or less, more preferably 200 parts by mass or less, still more preferably 150 parts by mass or less, particularly preferably 120 parts by mass or less, most preferably 90 parts by mass or less. When the amount is within the above-indicated range, the above-mentioned effects tend to be better achieved.

Examples of the silica include dry silica (anhydrous silica) and wet silica (hydrous silica). Wet silica is preferred because it contains a large number of silanol groups.

The silica preferably has a nitrogen adsorption specific surface area ($N_2SA$) of 40 $m^2/g$ or more, more preferably 120 $m^2/g$ or more, still more preferably 150 $m^2/g$ or more. The $N_2SA$ is preferably 400 $m^2/g$ or less, more preferably 200 $m^2/g$ or less, still more preferably 180 $m^2/g$ or less. When the $N_2SA$ is within the above-indicated range, the above-mentioned effects tend to be better achieved.

The nitrogen adsorption specific surface area of the silica is measured by the BET method in accordance with ASTM D3037-81.

The silica may be a product of, for example, Degussa, Rhodia, Tosoh Silica Corporation, Solvay Japan, or Tokuyama Corporation.

The amount of the silica, if present, per 100 parts by mass of the rubber component is preferably 1 part by mass or more, more preferably 10 parts by mass or more, still more preferably 30 parts by mass or more, particularly preferably 50 parts by mass or more. When the amount is not less than the lower limit, better wet grip performance, fuel economy, and abrasion resistance can be obtained. The amount is also preferably 120 parts by mass or less, more preferably 100 parts by mass or less, still more preferably 80 parts by mass or less. When the amount is not more than the upper limit, the silica readily disperses uniformly in the rubber composition, and therefore better wet grip performance, fuel economy, and abrasion resistance can be obtained.

Non-limiting examples of the carbon black include those commonly used in the tire industry, such as GPF, FEF, HAF, ISAF, and SAF. These types of carbon black may be used alone, or two or more of these may be used in combination.

The carbon black preferably has a nitrogen adsorption specific surface area ($N_2SA$) of 30 $m^2/g$ or more, more preferably 90 $m^2/g$ or more, still more preferably 120 $m^2/g$ or more, but preferably 300 $m^2/g$ or less, more preferably 250 $m^2/g$ or less, still more preferably 200 $m^2/g$ or less, particularly preferably 160 $m^2/g$ or less. When the $N_2SA$ is within the above-indicated range, the above-mentioned effects tend to be better achieved.

Herein, the $N_2SA$ of the carbon black is measured in accordance with JIS K6217-2:2001.

The carbon black preferably has a dibutylphthalate (DBP) oil absorption of 60 mL/100 g or more, more preferably 80 mL/100 g or more, but preferably 300 mL/100 g or less, more preferably 200 mL/100 g or less, still more preferably 150 mL/100 g or less. When the DBP is within the above-indicated range, the above-mentioned effects tend to be better achieved.

Herein, the DBP of the carbon black is measured in accordance with JIS K6217-4:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black, if present, per 100 parts by mass of the rubber component is preferably 1.0 part by mass or more, more preferably 2.0 parts by mass or more, still more preferably 3.0 parts by mass or more, but is preferably 50 parts by mass or less, more preferably 20 parts by mass or less, still more preferably 10 parts by mass or less, particularly preferably 8.0 parts by mass or less. When the amount is within the above-indicated range, the above-mentioned effects tend to be better achieved.

The rubber composition preferably contains a silane coupling agent together with silica.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used alone, or two or more of these may be used in combination. Among these, sulfide or mercapto silane coupling agents are preferred to better achieve the above-mentioned effects.

The silane coupling agent may be a product of, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of silica is preferably 3 parts by mass or more, more preferably 5 parts by mass or more. An amount of 3 parts by mass or more tends to allow the added silane coupling agent to produce its effect. The amount is also preferably 20 parts by mass or less, more preferably 10 parts by mass or less. An amount of 20 parts by mass or less tends to lead to an effect commensurate with the added amount, as well as good processability during kneading.

The rubber composition may contain a resin to more suitably achieve the above-mentioned effects.

The resin may be solid or liquid at room temperature (25°C), but is preferably solid (solid resin) to more suitably achieve the above-mentioned effects.

The resin preferably has a softening point of 30°C or higher, more preferably 45°C or higher, but preferably 300°C or lower, more preferably 200°C or lower. When the softening point is within the above-indicated range, the above-mentioned effects tend to be better achieved.

Herein, the softening point of the resin is determined in accordance with JIS K 6220-1:2001 with a ring and ball softening point measuring apparatus and is defined as the temperature at which the ball drops down.

Non-limiting examples of the resin include styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These resins may be used alone, or two or more of these may be used in combination. Among these, coumarone-indene resins are preferred to more suitably achieve the above-mentioned effects.

Styrene resins refer to polymers produced from styrenic monomers as structural monomers, and examples include polymers produced by polymerizing a styrenic monomer as a main component (50% by mass or more). Specific examples include homopolymers produced by polymerizing a styrenic monomer (e.g. styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene) alone, copolymers produced by copolymerizing two or more styrenic monomers, and copolymers of styrenic monomers and additional monomers copolymerizable therewith.

Examples of the additional monomers include acrylonitriles such as acrylonitrile and methacrylonitrile, unsaturated carboxylic acids such as acrylic acid and methacrylic acid, unsaturated carboxylic acid esters such as methyl acrylate and methyl methacrylate, dienes such as chloroprene, butadiene, and isoprene, and olefins such as 1-butene and 1-pentene; and α,β-unsaturated carboxylic acids and acid anhydrides thereof such as maleic anhydride.

In particular, α-methylstyrene resins (e.g. α-methylstyrene homopolymers, copolymers of α-methylstyrene and styrene) are preferred in view of the balance of the properties.

Coumarone-indene resins refer to resins that contain coumarone and indene as monomer components forming the skeleton (backbone) of the resins. Examples of monomer components which may be contained in the skeleton other than coumarone and indene include styrene, α-methylstyrene, methylindene, and vinyltoluene.

Examples of terpene resins include polyterpene, terpene phenol, and aromatic modified terpene resins.

Polyterpene resins refer to resins produced by polymerization of terpene compounds, or hydrogenated products of these resins. The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins made from the aforementioned terpene compounds, such as α-pinene resin, β-pinene resin, limonene resin, dipentene resin, and β-pinene-limonene resin, and hydrogenated terpene resins produced by hydrogenation of these terpene resins.

Examples of the terpene phenol resins include resins produced by copolymerization of the aforementioned

terpene compounds and phenolic compounds, and resins produced by hydrogenation of these resins. Specific examples include resins produced by condensation of the aforementioned terpene compounds, phenolic compounds, and formaldehyde. The phenolic compounds include, for example, phenol, bisphenol A, cresol, and xylenol.

Examples of the aromatic modified terpene resins include resins obtained by modifying terpene resins with aromatic compounds, and resins produced by hydrogenation of these resins . The aromatic compound may be any compound having an aromatic ring, such as: phenol compounds, e.g. phenol, alkylphenols, alkoxyphenols, and unsaturated hydrocarbon group-containing phenols; naphthol compounds, e.g. naphthol, alkylnaphthols, alkoxynaphthols, and unsaturated hydrocarbon group-containing naphthols; styrene and styrene derivatives, e.g. alkylstyrenes, alkoxystyrenes, and unsaturated hydrocarbon group-containing styrenes; and coumarone and indene.

Examples of the p-t-butylphenol acetylene resins include resins produced by condensation of p-t-butylphenol and acetylene.

The acrylic resin is not particularly limited. It may suitably be a solvent-free acrylic resin because it contains little impurities and has a sharp molecular weight distribution.

The solvent-free acrylic resin may be a (meth)acrylic resin (polymer) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45, all of which are hereby incorporated by reference in their entirety) using no or minimal amounts of auxiliary raw materials such as polymerization initiators, chain transfer agents, and organic solvents. Herein, the term "(meth) acrylic" means methacrylic and acrylic.

Preferably, the acrylic resin is substantially free of auxiliary raw materials such as polymerization initiators, chain transfer agents, and organic solvents. The acrylic resin is also preferably one having a relatively narrow composition distribution or molecular weight distribution, produced by continuous polymerization.

As described above, the acrylic resin is preferably one which is substantially free of auxiliary raw materials such as polymerization initiators, chain transfer agents, and organic solvents, namely which is of high purity. The acrylic resin preferably has a purity (resin content in the resin) of 95% by mass or more, more preferably 97% by mass or more.

Examples of the monomer component of the acrylic resin include (meth) acrylic acids and (meth) acrylic acid derivatives such as (meth)acrylic acid esters (e.g., alkyl esters, aryl esters, aralkyl esters), (meth)acrylamides, and (meth)acrylamide derivatives.

In addition to the (meth) acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may be used as monomer components of the acrylic resin.

The acrylic resin may be formed only of the (meth) acrylic component or may further contain constituent components other than the (meth)acrylic component.

The acrylic resin may contain a hydroxyl group, a carboxyl group, a silanol group, or the like.

The resin (e.g. styrene resin or coumarone-indene resin) may be a product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The amount of the resin, if present, per 100 parts by mass of the rubber component is preferably 1 part by mass or more, more preferably 3 parts by mass or more, still more preferably 5 parts by mass or more, but is preferably 50 parts by mass or less, more preferably 30 parts by mass or less, still more preferably 20 parts by mass or less. When the amount is within the above-indicated range, the above-mentioned effects can be more suitably achieved.

The rubber composition preferably contains an oil.

The oil may be, for example, a process oil, a vegetable fat or oil, or a mixture thereof. Examples of the process oil include paraffinic process oils, aromatic process oils, and naphthenic process oils. Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination.

The oil may be a product of, for example, Idemitsu Kosan Co., Ltd., Sankyo Yuka Kogyo K.K., Japan Energy, Olisoy, H&R, Hokoku Corporation, Showa Shell Sekiyu K.K., or Fuji Kosan Co., Ltd.

The amount of the oil, if present, per 100 parts by mass of the rubber component is preferably 5 parts by mass or more, more preferably 10 parts by mass or more, but is preferably 60 parts by mass or less, more preferably 30 parts by mass or less. The amount of the oil includes the oil contained in rubber (oil extended rubber).

The rubber composition preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of the stearic acid, if present, per 100 parts by mass of the rubber component is preferably 0.5 parts by mass or more, more preferably 1.0 part by mass or more, but is preferably 5.0 parts by mass or less, more

preferably 3.0 parts by mass or less, still more preferably 2.5 parts by mass or less. When the amount is within the above-indicated range, the above-mentioned effects tend to be well achieved.

The rubber composition preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl) propionate]methane. These antioxidants may be used alone, or two or more of these may be used in combination. Among these, p-phenylenediamine or quinoline antioxidants are preferred, with N-(1,3-dimethylbutyl)-N'-phenyl-p-phenylenediamine or 2,2,4-trimethyl-1,2-dihydroquinoline polymer being more preferred.

The antioxidant may be a product of, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 1.0 part by mass or more, more preferably 1.5 parts by mass or more, but is preferably 10 parts by mass or less, more preferably 7 parts by mass or less.

The rubber composition preferably contains a wax.

Non-limiting examples of the wax include petroleum waxes such as paraffin wax and microcrystalline wax; naturally-occurring waxes such as plant waxes and animal waxes; and synthetic waxes such as polymers of ethylene, propylene, or the like. These waxes may be used alone, or two or more of these may be used in combination.

The wax may be a product of, for example, Ouchi Shinko Chemical Industrial Co., Ltd., Nippon Seiro Co., Ltd., or Seiko Chemical Co., Ltd.

The amount of the wax, if present, per 100 parts by mass of the rubber component is preferably 0.5 parts by mass or more, more preferably 1 part by mass or more, but is preferably 10 parts by mass or less, more preferably 7 parts by mass or less.

In addition to the above components, the rubber composition may contain additives commonly used in the tire industry, such as vulcanizing agents other than sulfur (e.g., organic crosslinking agents, organic peroxides).

The rubber composition may be prepared by conventional methods. Specifically, it may be prepared, for example, by kneading the components using a kneading machine such as a Banbury mixer, kneader, or open roll mill, and then vulcanizing the kneaded mixture.

The kneading conditions when additives other than vulcanizing agents and sulfur atom-containing vulcanization accelerators are added include a kneading temperature of usually 50°C to 200°C, preferably 80°C to 190°C and a kneading time of usually 30 seconds to 30 minutes, preferably one minute to 30 minutes.

When a vulcanizing agent and/or a sulfur atom-containing vulcanization accelerator are/is added, the kneading temperature is usually 100°C or lower, and preferably ranges from room temperature to 80°C. The composition containing a vulcanizing agent and/or a sulfur atom-containing vulcanization accelerator is usually vulcanized by, for example, press vulcanization. The vulcanization temperature is usually 120°C to 200°C, preferably 140°C to 180°C.

The sulfur atom-containing vulcanization accelerator and the compound having a group of formula (I) may be added and kneaded together with sulfur in the step of kneading the rubber component and the sulfur or may be added and kneaded in a kneading step performed before kneading with any sulfur. To more suitably achieve the above-mentioned effects, the sulfur atom-containing vulcanization accelerator and the compound having a group of formula (I) are preferably added and kneaded in a kneading step performed before kneading with any sulfur.

The particulate zinc carrier may be added and kneaded together with sulfur in the step of kneading the rubber component and sulfur or may be added and kneaded in a kneading step performed before kneading with any sulfur. To more suitably achieve the above-mentioned effects, the particulate zinc carrier is preferably added and kneaded in a kneading step performed before kneading with any sulfur.

The rubber composition may be used for, for example, tires, footwear soles, industrial belts, packings, seismic isolators, or medical stoppers, and is especially suitable for tires.

The rubber composition is suitable for treads (cap treads) although it may also be used in tire components other than the treads, such as sidewalls, base treads, undertreads, clinch apexes, bead apexes, breaker cushion rubbers, rubbers for carcass cord toppings, insulations, chafers, and innerliners, as well as side reinforcement layers of run-flat tires.

The pneumatic tire of the present invention may be formed from the rubber composition by conventional methods.

Specifically, the unvulcanized rubber composition containing the components may be extruded into the shape of a tire component such as a tread and assembled with other tire components on a tire building machine in a usual manner to form an unvulcanized tire, which is then heated and pressurized in a vulcanizer to produce a tire. Thus, when the rubber composition is used to produce a tire, the tire includes a tire component formed from the rubber composition.

The pneumatic tire can be suitably used as a tire for passenger vehicles, large passenger vehicles, large SUVs, heavy load vehicles such as trucks and buses, light trucks, or motorcycles, or as a run-flat tire or racing tire, and especially as a tire for passenger vehicles.

Although, as described earlier, the rubber composition may be prepared by common methods, the rubber composition when prepared as described below provides both better abrasion resistance and practical cure time.

A preferred method for preparing the rubber composition (Preparation method 1) includes: before kneading a rubber component with any sulfur, kneading the rubber component and a sulfur atom-containing vulcanization accelerator; and then kneading the kneaded mixture with sulfur. Since the rubber component and the sulfur atom-containing vulcanization accelerator are kneaded before sulfur is added and kneaded, the sulfur atom-containing vulcanization accelerator is well dispersed in the rubber component, thereby resulting in a uniform crosslink density and good abrasion resistance. Further, since the sulfur atom-containing vulcanization accelerator is kneaded with the rubber component in a kneading step performed before kneading with any sulfur, cure rate is increased so that practical cure time can be obtained.

In kneading the rubber component and the sulfur atom-containing vulcanization accelerator in Preparation method 1, preferably a compound having a group of formula (I) is further kneaded. Although the presence of the compound presents a new problem in that cure rate may be decreased, appropriate cure rate can be obtained by kneading the rubber component with the sulfur atom-containing vulcanization accelerator and the compound in a kneading step performed before kneading with any sulfur.

In Preparation method 1, a rubber component, a sulfur atom-containing vulcanization accelerator, and optionally a compound having a group of formula (I) are kneaded before kneading the rubber component with any sulfur. As long as these conditions are satisfied, any material may be added in any step. For example, in the case where the kneading process consists of two steps including Step X (base kneading) and Step F (final kneading), it may be carried out by starting kneading of a rubber component, a sulfur atom-containing vulcanization accelerator, and a compound having a group of formula (I) at an early stage of Step X, followed by performing Step F. In the case where the kneading process consists of three steps including Step X (base kneading 1), Step Y (base kneading 2), and Step F (final kneading), it may be carried out by starting kneading of a rubber component and a sulfur atom-containing vulcanization accelerator in Step X, followed by adding and kneading a compound having a group of formula (I) in Step Y, followed by performing Step F. Remilling may be performed between the steps.

In Preparation method 1, the kneading temperature in the step of kneading a rubber component, a sulfur atom-containing vulcanization accelerator, and optionally a compound having a group of formula (I) is preferably 150°C or lower, more preferably 120°C or lower, still more preferably 100°C or lower. The lower limit is not particularly limited and is preferably 50°C or higher, more preferably 60°C or higher, still more preferably 70°C or higher, to improve dispersibility. The kneading time in this step is preferably 10 seconds or longer, more preferably two minutes or longer, still more preferably three minutes or longer, to improve dispersibility. The upper limit is not particularly limited and is preferably 12 minutes or shorter, more preferably 10 minutes or shorter, still more preferably eight minutes or shorter.

In Preparation method 1, after the kneading of a rubber component, a sulfur atom-containing vulcanization accelerator, and optionally a compound having a group of formula (I), preferably a step of kneading the kneaded mixture with the aforementioned particulate zinc carrier is performed. The kneading temperature in this step is preferably 160°C or lower, more preferably 150°C or lower. The lower limit is not particularly limited and is preferably 80°C or higher, more preferably 100°C or higher, still more preferably 120°C or higher, to improve dispersibility. The kneading time in this step is preferably 10 seconds or longer, more preferably one minute or longer, still more preferably two minutes or longer, to improve dispersibility. The upper limit is not particularly limited and is preferably 12 minutes or shorter, more preferably 10 minutes or shorter, still more preferably six minutes or shorter.

Another suitable method for preparing the rubber composition (Preparation method 2) includes: before kneading a rubber component with any filler, kneading the rubber component, a sulfur atom-containing vulcanization accelerator, and optionally a compound having a group of formula (I); and then kneading the kneaded mixture with a filler at a kneading temperature of 120°C or higher.

Specifically, a suitable example of Preparation method 2 includes:

before kneading a rubber component with any sulfur and any filler, kneading the rubber component, a sulfur atom-containing vulcanization accelerator, and optionally a compound having a group of formula (I), and then kneading the kneaded mixture with a filler at a kneading temperature of 120°C or higher; and
kneading the kneaded mixture containing the filler with sulfur.

In Preparation method 2, the particulate zinc carrier is preferably added and kneaded together with the filler. The particulate zinc carrier is also preferably added and kneaded together with the sulfur.

Sulfur atom-containing vulcanization accelerators tend to adsorb onto fillers. In this regard, when a rubber component is kneaded with a sulfur atom-containing vulcanization accelerator and then with a filler, the filler is kneaded with the rubber component in which the sulfur atom-containing vulcanization accelerator is better dispersed. It is thus

possible to reduce the adsorption of the sulfur atom-containing vulcanization accelerator onto the filler and to better maintain better dispersion of the sulfur atom-containing vulcanization accelerator in the rubber component after kneading with the filler. Further, when the kneaded mixture containing the filler is kneaded with sulfur, the sulfur is kneaded into the rubber component in which the sulfur atom-containing vulcanization accelerator is better dispersed, thereby resulting in more uniform crosslink density and better abrasion resistance.

In the step of kneading with a filler at a kneading temperature of 120°C or higher in Preparation method 2, the kneading is preferably performed in the presence of a sulfur donor. The sulfur donor may be kneaded together during the kneading of the rubber component and the sulfur atom-containing vulcanization accelerator or may be added together with the filler.

In Preparation method 2, once the rubber component, the sulfur donor, the sulfur atom-containing vulcanization accelerator, the filler, and optionally the compound having a group of formula (I) are kneaded at a kneading temperature of 120°C or higher, the sulfur donor releases active sulfur. The active sulfur reacts with the sulfur atom-containing vulcanization accelerator and the rubber component to bind the whole or a part (hereinafter referred to as "vulcanization accelerator residue") of the sulfur atom-containing vulcanization accelerator to the rubber component, or in other words to form a pendant structure in which the "-S-vulcanization accelerator residue" is bound to the rubber component. The mechanism of this reaction is presumably as follows: the released active sulfur reacts with the sulfur atom of the sulfur atom-containing vulcanization accelerator to form a structure having two or more sulfur atoms linked together, and this structure reacts with the double bond of the rubber component. When kneading is performed in the presence of the pendant structure, since the vulcanization accelerator residue moves with the rubber component, the uniformity of the dispersion of the vulcanization accelerator residue in the whole rubber composition is improved so that more uniform crosslink density can be obtained during vulcanization, thereby resulting in better abrasion resistance.

The kneading temperature refers to the measured temperature of the kneaded mixture in the kneading machine and may be measured using, for example, a noncontact temperature sensor.

In Preparation method 2, kneading of a rubber component, a sulfur atom-containing vulcanization accelerator, and optionally a compound having a group of formula (I) is started before kneading with any filler, and then a filler is added and kneaded at a kneading temperature of 120°C or higher. As long as these conditions are satisfied, any material may be added in any step. For example, in the case where the kneading process consists of two steps including Step X (base kneading) and Step F (final kneading), it may be carried out by starting kneading of a rubber component, a sulfur donor, a sulfur atom-containing vulcanization accelerator, and optionally a compound having a group of formula (I) at an early stage of Step X and then adding and kneading a filler at a kneading temperature of 120°C or higher during Step X, followed by performing Step F. In the case where the kneading process consists of three steps including Step X (base kneading 1), Step Y (base kneading 2), and Step F (final kneading), it may be carried out by starting kneading of a rubber component, a sulfur donor, a sulfur atom-containing vulcanization accelerator, and optionally a compound having a group of formula (I) in Step X, followed by adding and kneading a filler at a kneading temperature of 120°C or higher in Step Y, followed by performing Step F. Another example of the three-step kneading process may be carried out by starting kneading of a rubber component, a sulfur donor, a sulfur atom-containing vulcanization accelerator, and optionally a compound having a group of formula (I) at an early stage of Step X and then adding and kneading a filler at a kneading temperature of 120°C or higher during Step X, followed by performing Step Y and Step F. Alternatively, it may be carried out by starting kneading of a rubber component, a sulfur donor, a sulfur atom-containing vulcanization accelerator, and optionally a compound having a group of formula (I) at an early stage of Step X and then adding a filler during Step X, followed by further adding and kneading the filler at a kneading temperature of 120°C or higher in Step Y, followed by performing Step F. Remilling may be performed between the steps.

In Preparation method 2, the temperature of kneading the rubber component, the sulfur atom-containing vulcanization accelerator, and optionally the compound having a group of formula (I) is not particularly limited. In the case where a sulfur donor is kneaded together, the kneading temperature is preferably lower than 160°C, more preferably 150°C or lower, to inhibit progress of a crosslinking reaction caused by the sulfur donor and sulfur atom-containing vulcanization accelerator. The lower limit is not particularly limited and is preferably 60°C or higher.

In Preparation method 2, the time of kneading the rubber component, the sulfur atom-containing vulcanization accelerator, and optionally the compound having a group of formula (I) before the addition of the filler to the rubber component is not particularly limited. The kneading time is, for example, 10 seconds or longer to improve dispersibility of the sulfur atom-containing vulcanization accelerator. The upper limit is not particularly limited and is preferably eight minutes or shorter.

In Preparation method 2, the kneading temperature after the addition of the filler may be any temperature that is not lower than 120°C. The kneading temperature is preferably 170°C or lower to prevent excessive progress of a crosslinking reaction.

In Preparation method 2, the kneading time from when the kneading temperature reaches 120°C after the addition of the filler to the rubber component is not particularly limited and is preferably two minutes or longer to improve dispersibility of the sulfur donor and sulfur atom-containing vulcanization accelerator. The upper limit is not particularly

limited and is preferably 10 minutes or shorter. The kneading time refers to the period from the time when the kneading temperature reaches 120°C after the addition of the filler to the rubber component to the time when all of the steps in the kneading process are completed. For example, in the case where the filler is added to the rubber component in Step X, the kneading time is the period from the time when the kneading temperature reaches 120°C after the addition to the time when Step F (final kneading step) is completed.

The sulfur donor is elemental sulfur or a sulfur compound that can release active sulfur under curing conditions (e.g., at 150°C, 1.5 Mpa) or at lower temperatures or pressures, or in other words a compound that functions generally as a vulcanizing agent under curing conditions (e.g., at 150°C, 1.5 Mpa) or at lower temperatures or pressures. The released active sulfur will form a part of the pendant structure described above.

The sulfur donor may be elemental sulfur and/or a sulfur compound that can release active sulfur as described above. Examples of the elemental sulfur include powdered sulfur, precipitated sulfur, colloidal sulfur, surface-treated sulfur, and insoluble sulfur.

Adding too much elemental sulfur as the sulfur donor may cause excessive progress of a curing reaction in the kneading process. Hence, when the rubber composition contains elemental sulfur as the sulfur donor, the amount of the elemental sulfur to be introduced before kneading the rubber component with any filler is preferably 0.1 parts by mass or less per 100 parts by mass of the rubber component (the total amount of the rubber component used in all steps) . In view of tensile strength, the amount is also preferably 0.05 parts by mass or more.

Examples of the sulfur compound functioning as a sulfur donor include polymeric polysulfides represented by the formula: $-(-M-S-C-)_n-$, and compounds containing a structure with two or more singly bonded sulfur atoms: $-S_n-$ ($n \geq 2$) which can release active sulfur. Examples of such compounds include alkylphenol disulfides, morpholine disulfides, thiuram vulcanization accelerators containing $-S_n-$ ($n \geq 2$) (e.g., tetramethylthiuram disulfide (TMTD), tetraethylthiuram disulfide (TETD), tetrabutylthiuram disulfide (TBTD), dipentamethylenethiuram tetrasulfide (DPTT)), 2-(4'-morpholinodithio)benzothiazole (MDB), and polysulfide silane coupling agents (e.g. Si69 (bis(3-triethoxysilylpropyl)tetrasulfide) available from Degussa). These compounds may be used alone, or two or more of these may be used in combination. Among these, thiuram vulcanization accelerators containing $-S_n-$ ($n \geq 2$) are preferred, with dipentamethylenethiuram tetrasulfide (DPTT) being more preferred.

When the rubber composition contains a sulfur compound as the sulfur donor, the amount of the sulfur compound to be introduced before kneading the rubber component with any filler is preferably 0.1 parts by mass or more, more preferably 0.2 parts by mass or more per 100 parts by mass of the rubber component (the total amount of the rubber component used in all steps) to promote the formation of the pendant structure. The amount is also preferably 5 parts by mass or less, more preferably 3 parts by mass or less, still more preferably 2 parts by mass or less, to suppress gelation during kneading.

Some sulfur atom-containing vulcanization accelerators function as sulfur donors (for example, vulcanization accelerators containing a sulfur atom bound to another molecule via a single bond). Thus, the pendant structure can also be formed by incorporating a large amount of a single sulfur atom-containing vulcanization accelerator functioning as a sulfur donor or by combining two or more types of such vulcanization accelerators. However, the incorporation of a large amount of a sulfur atom-containing vulcanization accelerator functioning as a sulfur donor may cause excessive progress of a crosslinking reaction during kneading, while the incorporation of a small amount thereof may be less likely to provide a crosslink density-uniformizing effect. Therefore, the sulfur donor and sulfur atom-containing vulcanization accelerator to be kneaded before the addition of the filler are preferably provided as a combination of a sulfur donor (a sulfur atom-containing vulcanization accelerator functioning as a sulfur donor, and/or other sulfur donors) and a non-sulfur releasing sulfur atom-containing vulcanization accelerator (a sulfur atom-containing vulcanization accelerator which does not function as a sulfur donor).

In Preparation method 2, the amount of the sulfur atom-containing vulcanization accelerator to be introduced before kneading the rubber component with any filler is preferably 1.0 part by mass or more, more preferably 1.5 parts by mass or more per 100 parts by mass of the rubber component (the total amount of the rubber component used in all steps) to allow the curing reaction to efficiently proceed during the vulcanization step. The amount is also preferably 5.0 parts by mass or less, more preferably 3.0 parts by mass or less, in view of scorch properties and inhibition of blooming to the surface.

Preparation method 2 preferably further includes kneading an additional sulfur donor (in particular, sulfur) in a step other than the steps performed before kneading the rubber component with any filler. The addition of an additional sulfur donor can allow the crosslinking reaction to sufficiently proceed during vulcanization while preventing excessive progress of a crosslinking reaction during kneading.

The additional sulfur donor may be introduced, for example, at a later stage of Step X or in Step Y, where the rubber component is kneaded with a filler at a kneading temperature of 120°C or higher, or in Step F performed after the kneading of the rubber component with the filler at a kneading temperature of 120°C or higher. The additional sulfur donor may be the same as or different from the sulfur donor added before the addition of the filler to the rubber component. For example, it is preferably elemental sulfur such as powdered sulfur, precipitated sulfur, colloidal sulfur, surface-treated

sulfur, or insoluble sulfur.

In the rubber composition, the amount of the additional sulfur donor per 100 parts by mass of the rubber component (the total amount of the rubber component used in all steps) is not particularly limited and is preferably 0.5 parts by mass or more, more preferably 0.8 parts by mass or more, to allow the curing reaction to efficiently proceed during the vulcanization step. The amount of the additional sulfur donor is also preferably 3.0 parts by mass or less, more preferably 2.5 parts by mass or less, still more preferably 2.0 parts by mass or less, to obtain excellent abrasion resistance.

The additional sulfur donor may be added with an additional vulcanization accelerator. Examples of the additional vulcanization accelerator include sulfur atom-containing vulcanization accelerators such as thiuram disulfides or polysulfides, and sulfur atom-free vulcanization accelerators such as guanidine vulcanization accelerators, aldehyde-amine vulcanization accelerators, aldehyde-ammonia vulcanization accelerators, and imidazoline vulcanization accelerators.

In the rubber composition, the amount of the additional vulcanization accelerator per 100 parts by mass of the rubber component (the total amount of the rubber component used in all steps) is not particularly limited and is preferably 0.1 parts by mass or more, more preferably 1.0 part by mass or more. The amount is also preferably 5.0 parts by mass or less, more preferably 3.0 parts by mass or less.

To the kneaded mixture obtained after Steps X and Y (base kneading) may usually be added a vulcanizing agent and a sulfur atom-containing vulcanization accelerator to perform Step F (final kneading). The kneading temperature in Step F (final kneading) is usually 100°C or lower, and preferably ranges from room temperature to 80°C.

The unvulcanized rubber composition obtained after Step F may be vulcanized by a usual method to obtain a vulcanized rubber composition. The vulcanization temperature is usually 120°C to 200°C, preferably 140°C to 180°C.

The rubber composition obtained by any of the above methods for preparing the rubber composition has better abrasion resistance. Further, it provides practical cure time.

## EXAMPLES

The present invention is specifically described with reference to examples.

Synthesis Example 1 (Synthesis of Particulate zinc carrier 1)

An amount of 91.5 g of zinc oxide was added to 847 mL of a 5.5% by mass aqueous suspension of calcined clay, and they were sufficiently stirred. To the mixture were added 330 g of a 10% by mass aqueous solution of sodium carbonate and 340 g of a 10% by mass aqueous solution of zinc chloride, followed by stirring. Subsequently, 30% by mass carbon dioxide gas was injected into the resulting mixture until the pH reached 7 or lower so that basic zinc carbonate was precipitated on the surface of calcined clay, thereby synthesizing a particulate zinc carrier. The particulate zinc carrier was subjected to dehydration, drying, and pulverization steps to obtain powder. Thus, Particulate zinc carrier 1 was prepared.

Particulate zinc carrier 1 had a BET specific surface area of 50 $m^2/g$. In Particulate zinc carrier 1, 45% by mass, calculated as metallic zinc, of basic zinc carbonate was supported on calcined clay. The supported basic zinc carbonate thus had a BET specific surface area of 60 $m^2/g$.

Synthesis Example 2 (Synthesis of Particulate zinc carrier 2)

An amount of 25.5 g of zinc oxide was added to 847 mL of a 7.3% by mass aqueous suspension of calcined clay, and they were sufficiently stirred. To the mixture were added 330 g of a 10% by mass aqueous solution of sodium carbonate and 340 g of a 10% by mass aqueous solution of zinc chloride, followed by stirring. Subsequently, 30% by mass carbon dioxide gas was injected into the resulting mixture until the pH reached 7 or lower so that basic zinc carbonate was precipitated on the surface of calcined clay, thereby synthesizing a particulate zinc carrier. The particulate zinc carrier was subjected to dehydration, drying, and pulverization steps to obtain powder. Thus, Particulate zinc carrier 2 was prepared.

Particulate zinc carrier 2 had a BET specific surface area of 38 $m^2/g$. In Particulate zinc carrier 2, 30% by mass, calculated as metallic zinc, of basic zinc carbonate was supported on calcined clay. The supported basic zinc carbonate thus had a BET specific surface area of 59 $m^2/g$.

The chemicals used in examples and comparative examples are listed below.

SBR: NS616 (non-oil extended SBR, styrene content: 20% by mass, vinyl content: 66% by mass, Tg: -23°C, Mw: 240,000) available from Zeon Corporation

BR: BR730 (high-cis BR, BR synthesized using Nd catalyst, cis content: 97% by mass, Mooney viscosity (at 100°C):

55, Mw/Mn: 2.51, vinyl content: 0.9% by mass) available from JSR Corporation
NR: TSR20 (natural rubber)
Carbon black: Seast 9H ($N_2SA$: 142 $m^2/g$, DBP oil absorption: 130 mL/100 g) available from Tokai Carbon Co., Ltd.
Silica: Ultrasil VN3 ($N_2SA$: 175 $m^2/g$) available from Degussa
Silane coupling agent: Si266 (bis(3-triethoxysilyl-propyl)disulfide) available from Degussa
Wax: SUNNOC wax available from Ouchi Shinko Chemical Industrial Co., Ltd.
Oil: Diana Process AH-24 available from Idemitsu Kosan Co., Ltd.
Antioxidant: OZONONE 6C (N-(1,3-dimethylbutyl)-N'-phenyl-p-phenylenediamine) available from Seiko Chemical Co., Ltd.
Stearic acid: stearic acid "TSUBAKI" available from NOF Corporation
Sulfur: powdered sulfur (oil content: 5%) available from Tsurumi Chemical Industry Co., Ltd.
Zinc oxide: zinc oxide available from Mitsui Mining & Smelting Co., Ltd.
Particulate zinc carrier 1: Particulate zinc carrier 1 prepared in Synthesis Example 1
Particulate zinc carrier 2: Particulate zinc carrier 2 prepared in Synthesis Example 2
Compound 1: 2,2-bis(4,6-dimethylpyrimidyl)disulfide (2,2'-disulfanediylbis(4,6-dimethylpyrimidine), a compound of formula (I-1) as described in JP 2004-500471 T which is hereby incorporated by reference in its entirety)
Compound 2: N-cyclohexyl(4,6-dimethyl-2-pyrimidine)-sulfenamide (a compound of formula (1-2))
Vulcanization accelerator CZ: NOCCELER CZ (CBS, N-cyclohexyl-2-benzothiazolylsulfenamide) available from Ouchi Shinko Chemical Industrial Co., Ltd.
Vulcanization accelerator DPG: NOCCELER D (DPG, 1,3-diphenylguanidine) available from Ouchi Shinko Chemical Industrial Co., Ltd.

<Examples and Comparative Examples>

According to each of the formulations indicated in tables below, the chemicals listed in the base kneading step 1 section were kneaded using a 1.7 L Banbury mixer at a kneading temperature of 80°C for five minutes (base kneading step 1) . The kneaded mixture obtained in the base kneading step 1 was then kneaded with the chemicals listed in the base kneading step 2 section using the 1.7 L Banbury mixer at a kneading temperature of 140°C for three minutes (base kneading step 2) . Subsequently, the kneaded mixture obtained in the base kneading step 2 was kneaded with the chemicals listed in the final kneading step section using an open roll mill at about 80°C for three minutes (final kneading step) to obtain an unvulcanized rubber composition. The unvulcanized rubber composition was then press-vulcanized at 170°C for 12 minutes to obtain a vulcanized rubber composition.

The vulcanized rubber compositions prepared as above were evaluated as follows. The results are shown in the tables. In Table 1, Comparative Example 1-1 is taken as a reference comparative example; in Table 2, Comparative Example 2-1 is taken as a reference comparative example; in Table 3, Comparative Example 3-1 is taken as a reference comparative example.

(Abrasion resistance index)

The Lambourn abrasion loss of the vulcanized rubber compositions was determined using a Lambourn abrasion tester at a temperature of 20°C, a slip ratio of 20%, and a test time of two minutes. Then, a volume loss was calculated from the Lambourn abrasion loss. The volume losses of the formulation examples are expressed as an index (Lambourn abrasion index), with the reference comparative example set equal to 100. A higher index indicates higher abrasion resistance.

(Heat resistance)

Rubber samples (vulcanized rubber compositions) were heat-aged in an oven at 80°C for 200 hours. No. 3 dumbbell specimens prepared from the heat-aged samples were subjected to a tensile test in accordance with JIS K 6251 "Rubber, vulcanized or thermoplastics -- Determination of tensile stress-strain properties" to measure the maximum elongation (EB) and tensile stress at break (TB). A breaking energy (TB×EB/2) was calculated from the measured values. The results are expressed as an index, with the reference comparative example set equal to 100. A higher index indicates higher heat resistance.

$$\text{(Heat resistance index)} = [(TB\times EB)/2 \text{ of each formulation example}]/[(TB\times EB/2) \text{ of reference comparative example}] \times 100$$

(Flex crack growth resistance test)

Specimens were prepared from the vulcanized rubber sheets (vulcanized rubber compositions) and subjected to a flex crack growth test in accordance with JIS K6260 "Rubber, vulcanized or thermoplastic -- Determination of flex cracking and crack growth (De Mattia type) ". In the test, the rubber sheets were repeatedly flexed at 70% elongation one million times, and then the length of a generated crack was measured. The reciprocals of the measured values (lengths) are expressed as an index, with the reference comparative example set equal to 100. A higher index means that the growth of cracks was more suppressed, indicating higher crack growth resistance.

[Table 1]

Rubber composition for tread

| | | | Example 1-1 | Example 1-2 | Example 1-3 | Example 1-4 | Comparative Example 1-1 | Comparative Example 1-2 | Comparative Example 1-3 | Comparative Example 1-4 |
|---|---|---|---|---|---|---|---|---|---|---|
| Amount (parts by mass) | Base kneading step 1 | SBR | 80 | 80 | 80 | 80 | 80 | 80 | 80 | 80 |
| | | BR | 20 | 20 | 20 | 20 | 20 | 20 | 20 | 20 |
| | | Carbon black | 5 | 5 | 5 | 5 | 5 | 5 | 5 | 5 |
| | | Silica | 75 | 75 | 75 | 75 | 75 | 75 | 75 | 75 |
| | | Silane coupling agent | 6 | 6 | 6 | 6 | 6 | 6 | 6 | 6 |
| | | Oil | 20 | 20 | 20 | 20 | 20 | 20 | 20 | 20 |
| | | Compound 1 | 1 | 1 | | 1 | | 1 | | |
| | | Compound 2 | | | 1 | | | | | |
| | | Vulcanization accelerator CZ | | 1.12 | | | | | | |
| | Base kneading step 2 | Wax | 2 | 2 | 2 | 2 | 2 | 2 | 2 | 2 |
| | | Antioxidant | 2 | 2 | 2 | 2 | 2 | 2 | 2 | 2 |
| | | Stearic acid | 2 | 2 | 2 | 2 | 2 | 2 | 2 | 2 |
| | | Zinc oxide | | | | | 2 | 2 | | 2 |
| | | Particulate zinc carrier 1 | 0.9 | 0.9 | 0.9 | | | | 0.9 | |
| | | Particulate zinc carrier 2 | | | | 0.9 | | | | |
| | | Vulcanization accelerator CZ | | | | | | | | |
| | Final kneading step | Sulfur | 1 | 1 | 1 | 1 | 1.6 | 1 | 1 | 1 |
| | | Compound 1 | | | | | | | | 1 |
| | | Vulcanization accelerator CZ | 1.12 | | 1.12 | 1.12 | 1.8 | 1.12 | 1.8 | 1.12 |
| | | Vulcanization accelerator DPG | 2 | 2 | 2 | 2 | 2 | 2 | 2 | 2 |
| Evaluation | | Abrasion resistance index | 125 | 128 | 120 | 120 | 100 | 112 | 105 | 108 |
| | | Vehicle test (Abrasion resistance) | 135 | 141 | 118 | 116 | 100 | 110 | 104 | 106 |

[Table 2]

Rubber composition for tread

| | | | Example 2-1 | Comparative Example 2-1 |
|---|---|---|---|---|
| Amount (parts by mass) | Base kneading step 1 | SBR | 60 | 60 |
| | | BR | 20 | 20 |
| | | NR | 20 | 20 |
| | | Carbon black | 30 | 30 |
| | | Silica | 30 | 30 |
| | | Silane coupling agent | 2.4 | 2.4 |
| | | Oil | 20 | 20 |
| | | Compound 1 | 2 | |
| | | Compound 2 | | |
| | | Vulcanization accelerator CZ | | |
| | Base kneading step 2 | Wax | 2 | 2 |
| | | Antioxidant | 2 | 2 |
| | | Stearic acid | 2 | 2 |
| | | Zinc oxide | | 2 |
| | | Particulate zinc carrier 1 | 1.5 | |
| | | Particulate zinc carrier 2 | | |
| | | Vulcanization accelerator CZ | | |
| | Final kneading step | Sulfur | 1 | 1.6 |
| | | Compound 1 | | |
| | | Vulcanization accelerator CZ | 1.12 | 1.8 |
| | | Vulcanization accelerator DPG | 2 | 2 |
| Evaluation | | Abrasion resistance index | 118 | 100 |
| | | Vehicle test (Abrasion resistance) | 119 | 100 |

[Table 3]

Rubber composition for sidewall

| | | | Example | Comparative Example |
|---|---|---|---|---|
| | | | 3-1 | 3-1 |
| Amount (parts by mass) | Base kneading step 1 | SBR | | |
| | | BR | 60 | 60 |
| | | NR | 40 | 40 |
| | | Carbon black | 50 | 50 |
| | | Silica | | |
| | | Silane coupling agent | | |
| | | Oil | 5 | 5 |
| | | Compound 1 | 1 | |
| | | Compound 2 | | |
| | | Vulcanization accelerator CZ | | |
| | Base kneading step 2 | Wax | 1 | 1 |
| | | Antioxidant | 2 | 2 |
| | | Stearic acid | 2 | 2 |
| | | Zinc oxide | | 4 |
| | | Particulate zinc carrier 1 | 1.5 | |
| | | Particulate zinc carrier 2 | | |
| | | Vulcanization accelerator CZ | | |
| | Final kneading step | Sulfur | 1.3 | 2 |
| | | Compound 1 | | |
| | | Vulcanization accelerator CZ | 0.8 | 1 |
| | | Vulcanization accelerator DPG | | |
| Evaluation | | Heat resistance index | 120 | 100 |
| | | Crack growth resistance index | 120 | 100 |

As shown in Tables 1 to 3, the rubber compositions of the examples which contained a compound having a group of formula (I), a sulfur atom-containing vulcanization accelerator, and a particulate zinc carrier including finely divided zinc oxide or finely divided basic zinc carbonate supported on the surface of a silicate particle exhibited good abrasion resistance, heat resistance, and crack growth resistance. Further, comparisons between Example 1-1 and Comparative Examples 1-1 to 1-3 demonstrated that the combination of the compound and the particulate zinc carrier synergistically improved the properties. In addition, practical cure time was ensured in the examples.

## Claims

**1.** A rubber composition, comprising:

a compound having a group represented by the following formula (I):

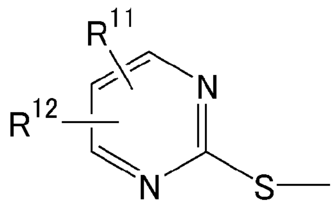 (I)

wherein $R^{11}$ and $R^{12}$ are the same or different and each represent a hydrogen atom or a substituted or unsubstituted monovalent hydrocarbon group optionally containing a heteroatom;
a sulfur atom-containing vulcanization accelerator; and
a particulate zinc carrier including a silicate particle and finely divided zinc oxide or finely divided basic zinc carbonate supported on the surface of the silicate particle.

**2.** The rubber composition according to claim 1,
wherein the rubber composition is obtained by, before kneading a rubber component with any sulfur, kneading the rubber component and the sulfur atom-containing vulcanization accelerator, and then kneading the kneaded mixture with sulfur.

**3.** The rubber composition according to claim 1,
wherein the rubber composition is obtained by, before kneading a rubber component with any sulfur, kneading the rubber component, the sulfur atom-containing vulcanization accelerator, and the compound, and then kneading the kneaded mixture with sulfur.

**4.** The rubber composition according to any one of claims 1 to 3,
wherein the rubber composition comprises, per 100 parts by mass of a rubber component thereof, 0.1 to 5.0 parts by mass of the compound.

**5.** The rubber composition according to any one of claims 1 to 4, which is a rubber composition for tires.

**6.** A method for preparing the rubber composition according to any one of claims 1 to 5, the method comprising:

before kneading a rubber component with any sulfur, kneading the rubber component and the sulfur atom-containing vulcanization accelerator; and
then kneading the kneaded mixture with sulfur.

**7.** A method for preparing the rubber composition according to any one of claims 1 to 5, the method comprising:

before kneading a rubber component with any sulfur, kneading the rubber component, the sulfur atom-containing vulcanization accelerator, and the compound; and
then kneading the kneaded mixture with sulfur.

**8.** A pneumatic tire, comprising a tire component formed from the rubber composition according to any one of claims 1 to 5.

## Patentansprüche

**1.** Kautschukzusammensetzung, die umfasst:
eine Verbindung mit einer durch die folgende Formel (I) dargestellten Gruppe:

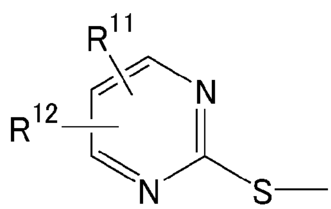 (I)

wobei $R^{11}$ und $R^{12}$ gleich oder unterschiedlich sind und jeweils ein Wasserstoffatom oder eine substituierte oder unsubstituierte einwertige Kohlenwasserstoffgruppe, die optional ein Heteroatom enthält, darstellen; und
einen Schwefelatom-enthaltenden Vulkanisationsbeschleuniger; und
einen teilchenförmigen Zinkträger, der ein Silikatteilchen und auf der Oberfläche des Silikatteilchens getragenes fein verteiltes Zinkoxid oder fein verteiltes basisches Zinkcarbonat enthält.

**2.** Kautschukzusammensetzung nach Anspruch 1,
wobei die Kautschukzusammensetzung erhalten wird, indem vor dem Kneten einer Kautschukkomponente mit irgendeinem Schwefel die Kautschukkomponente und der Schwefelatom-enthaltende Vulkanisationsbeschleuniger geknetet werden, und dann die geknetete Mischung mit Schwefel geknetet wird.

**3.** Kautschukzusammensetzung nach Anspruch 1,
wobei die Kautschukzusammensetzung erhalten wird, indem vor dem Kneten einer Kautschukkomponente mit irgendeinem Schwefel die Kautschukkomponente, der Schwefelatom-enthaltende Vulkanisationsbeschleuniger und die Verbindung geknetet werden, und dann die geknetete Mischung mit Schwefel geknetet wird.

**4.** Kautschukzusammensetzung nach einem der Ansprüche 1 bis 3,
wobei die Kautschukzusammensetzung pro 100 Masseteile einer Kautschukkomponente davon 0,1 bis 5,0 Masseteile der Verbindung umfasst.

**5.** Kautschukzusammensetzung nach einem der Ansprüche 1 bis 4, die eine Kautschukzusammensetzung für Reifen ist.

**6.** Verfahren zur Herstellung der Kautschukzusammensetzung nach einem der Ansprüche 1 bis 5, wobei das Verfahren umfasst:

vor dem Kneten einer Kautschukkomponente mit irgendeinem Schwefel, Kneten der Kautschukkomponente und des Schwefelatom-enthaltenden Vulkanisationsbeschleunigers; und
dann Kneten der gekneteten Mischung mit Schwefel.

**7.** Verfahren zur Herstellung der Kautschukzusammensetzung nach einem der Ansprüche 1 bis 5, wobei das Verfahren umfasst:

vor dem Kneten einer Kautschukkomponente mit irgendeinem Schwefel, Kneten der Kautschukkomponente, des Schwefelatom-enthaltenden Vulkanisationsbeschleunigers und der Verbindung; und
dann Kneten der gekneteten Mischung mit Schwefel.

**8.** Luftreifen, der eine Reifenkomponente umfasst, die aus der Kautschukzusammensetzung nach einem der Ansprüche 1 bis 5 gebildet ist.

## Revendications

**1.** Composition de caoutchouc comprenant :
un composé ayant un groupe représenté par la formule (I) suivante :

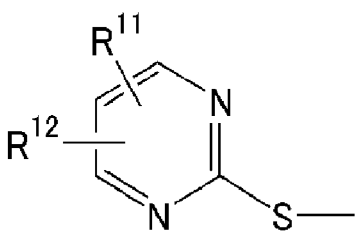

(I)

dans laquelle chacun de $R^{11}$ et $R^{12}$, qui sont identiques ou différents, représente un atome d'hydrogène ou un groupe hydrocarboné monovalent substitué ou non substitué contenant éventuellement un hétéroatome ;
un accélérateur de vulcanisation contenant un atome de soufre ; et

un support en zinc particulaire contenant une particule de silicate et de l'oxyde de zinc finement divisé ou du carbonate de zinc basique finement divisé supporté sur la surface de la particule de silicate.

**2.** Composition de caoutchouc selon la revendication 1, laquelle composition de caoutchouc est obtenue, avant malaxage d'un composant caoutchouc avec tout soufre, par malaxage du composant caoutchouc et de l'accélérateur de vulcanisation contenant un atome de soufre, et ensuite malaxage du mélange malaxé avec du soufre.

**3.** Composition de caoutchouc selon la revendication 1, laquelle composition de caoutchouc est obtenue, avant malaxage d'un composant caoutchouc avec tout soufre, par malaxage du composant caoutchouc, de l'accélérateur de vulcanisation contenant un atome de soufre, et du composé, et ensuite malaxage du mélange malaxé avec du soufre.

**4.** Composition de caoutchouc selon l'une quelconque des revendications 1 à 3, laquelle composition de caoutchouc comprend, pour 100 parties en masse d'un composant caoutchouc de celle-ci, 0,1 à 5,0 parties en masse du composé.

**5.** Composition de caoutchouc selon l'une quelconque des revendications 1 à 4, qui est une composition de caoutchouc pour pneus.

**6.** Procédé pour préparer la composition de caoutchouc de l'une quelconque des revendications 1 à 5, le procédé comprenant :

avant malaxage d'un composant caoutchouc avec tout soufre, le malaxage du composant caoutchouc et de l'accélérateur de vulcanisation contenant un atome de soufre ; et
ensuite malaxage du mélange malaxé avec du soufre.

**7.** Procédé pour préparer la composition de caoutchouc de l'une quelconque des revendications 1 à 5, le procédé comprenant :

avant malaxage d'un composant caoutchouc avec tout soufre, le malaxage du composant caoutchouc, de l'accélérateur de vulcanisation contenant un atome de soufre, et du composé ; et
ensuite malaxage du mélange malaxé avec du soufre.

**8.** Pneu comprenant un composant de pneu formé à partir de la composition de caoutchouc de l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6646029 B1
- US 3839303 A
- JP 2004263134 A
- JP 2009079077 A
- US 4414370 A
- JP S596207 A
- JP H558005 B
- JP H1313522 A
- US 5010166 A
- JP 2004500471 T


### Non-patent literature cited in the description


- annual research report TREND. Toagosei Co., Ltd, 2000, vol. 3, 42-45